# FASCICULE DE BREVET EUROPEEN

(11) **EP 0 820 234 B1**
(45) Date de publication et mention de la délivrance du brevet: **12.07.2000**
(21) Numéro de dépôt: 96912084.9
(22) Date de dépôt: 09.04.1996
(51) Int. Cl.: A21D 10/00

(54) **PROCEDE DE FABRICATION DE METS SALES OU SUCRES A BASE DE PATE CUITE ET DE SAUCE ET/OU GARNITURE ET/OU CONDIMENTS TELS QUE DES PIZZA, TARTES OU AUTRES**
VERFAHREN ZUR HERSTELLUNG VON SALZIGEN ODER SÜSSEN SPEISEN AUF EINER GEBACKENEN TEIGBASIS MIT SOSSE UND/ODER GARNITUR, Z.B. PIZZAS, TORTEN ODER ANDEREN SPEISEN
METHOD FOR PREPARING SAVOURY OR SWEET FOODS SUCH AS PIZZAS, PIES AND THE LIKE FROM BAKED PASTRY AND A SAUCE AND/OR A TOPPING AND/OR CONDIMENTS

(30) Priorité: 12.04.1995 FR 9504498
(43) Date de publication de la demande: 28.01.1998
(73) Titulaire: Societé Civile B.A.R.H., 81000 Albi (FR)
(72) Inventeur: ACKNIN, Christian, F-81150 Terssac (FR); RAYMOND, Philippe, F-81000 Albi (FR)
(74) Mandataire: Ravina, Bernard
(86) Numéro de dépôt international: FR9600532
(87) Numéro de publication internationale: WO9632018

(56) Documents cités:
- EP-A- 0 502 327
- WO-A-87/03784
- DE-A- 2 649 772
- GB-A- 796 499
- US-A- 2 772 171
- US-A- 3 809 224
- US-A- 4 100 308
- US-A- 4 994 056

## Description

La présente invention a pour objet un procédé de fabrication de mets salés ou sucrés à base de pâte cuite et de sauce et condiments tels que des pizza ou des tartes.

Le procédé traditionnel et essentiellement manuel consiste à préparer une pâte à partir d'un mélange pulvérulent à base de farine et de liquide tel que l'eau, à l'étaler, à la garnir et à la mettre à cuire au four.
La rationnalisation du procédé traditionnel passe dans la plupart des cas par des préparations anticipées qui permettent de réduire la durée de préparation au moment de la commande.

Les techniques connues associées à la congélation déplacent les durées de préparation vers le moment le plus propice.
Ce résultat, par les techniques connues, est souvent obtenu au détriment des qualités sanitaires, diététiques et gustatives, d'une part en raison de la rupture de la chaine du froid, d'autre part en raison du préstockage des ingrédients, composants, pâte, sauce, garnitures et condiments, prêts à l'emploi.

L'objet de l'invention est un procédé de fabrication mettant en oeuvre par des moyens mécaniques, un emballage adapté qui permette de stocker les ingrédients, secs et pulvérulents, tel le mélange à base de farine, les liquides, tels l'eau pour réaliser la pâte, la sauce et/ou la garniture et les condiments de telle manière qu'ils ne soient mis en contact, soit qu'au moment où leur mélange est nécessaire dans le cas des pulvérulents et liquides pour réaliser la pâte, soit au moment de leur répartition sur la pâte, dans le cas de la sauce et/ou de la garniture.

Il est connu d'utiliser des emballages à plusieurs compartiments pour des produits qui ne doivent être mélangés qu'au moment de l'utilisation.
- Le brevet US 4 994 056 (IKEDA) décrit un tel emballage, pour des substances médicamenteuses, qui est une poche souple à deux compartiments séparés par un système à pincement qui permet de les faire communiquer pour mélanger les produits et obtenir le médicament à utiliser.
- Le brevet WO 8703784 (HEDEN-TEAM Aktimgesellschaft) décrit un emballage utilisé dans la confection du pain.
Selon ce brevet de l'art antérieur, une première poche souple contient le mélange à base de farine et renferme une deuxième poche contenant le liquide qui est éclaté dans la première poche par une pression lorsque le mélange est à réaliser.
Ce brevet et l'emballage qu'il décrit est limité à la réalisation du seul mélange pulvérulent et eau permettant d'obtenir du pain.
Le problème d'une éventuelle garniture humide pâteuse ou liquide telle qu'une sauce ou du fromage ou une crème n'est pas prévue par ce brevet ne peut être solutionné par l'ajout à la première poche d'une autre poché contenant par exemple une sauce.
Dans ce brevet, la poche à pâte est ouverte dans une enceinte fermée de cuisson de la pâte, ce qui exclut qu'une troisième poche, par exemple de sauce et/ou de garniture puisse rester en attente de la formation et/ou de la cuisson de la pâte.

Le procédé selon l'invention vise à la réalisation de préparations culinaires dans des délais très brefs tout en assurant les qualités sanitaires, gustatives et diététiques et en ayant une garantie de conservation sanitaire des produits avant emploi.

Le procédé selon l'invention vise en outre à reproduire en accéléré, au moment voulu, de manière rapide, précise et infailliblement reproductibles les gestes culinaires élémentaires.

L'invention vise en outre un procédé et un emballage de mise en oeuvre qui permette la réalisation de manière séquencée de la pâte par mélange des ingrédients dans l'emballage lui-même, puis sa distribution sur un moyen de cuisson et ensuite la distribution de la sauce et/ou de la garniture qui peut être liquide, cas de la sauce tomate, pâteuse, cas du fromage par exemple, ou constituée de morceaux, cas du jambon ou des anchois par exemple et ce, à partir d'un même emballage ou de plusieurs emballages de même conception à plusieurs enceintes renfermant des ingrédients qu'il n'est pas souhaitable de mélanger avant que n'intervienne dans le déroulement de fabrication la séquence les concernant.
A cet effet, le procédé selon l'invention de fabrication de mets salés ou sucrés à base pâte cuite et de sauce et/ou garniture et/ou condiments tels que des pizza ou tartes ou autres dont les ingrédients de base secs et/ou pulvérulents et/ou humides ne doivent être mis en contact qu'au moment de la préparation, se caractérise essentiellement en ce qu'il est fait usage pour un met d'un emballage unitaire pour les dits condiments comprenant des enceintes de stockage séparées des dits condiments secs et/ou pulvérulents et/ou humides, liquides ou pâteux, les dites enceintes étant séparées hermétiquement et pouvant être communicantes entre elles pour permettre le mélange des ingrédients et leur pétrissage et pouvant être ouvertes pour permettre la répartition successive des produits.

Suivant une autre caractéristique du procédé objet de l'invention après mélange, brassage et pétrissage des ingrédients secs et humides, la pâte obtenue est déversée sur un organe de cuisson et au moins une garniture est extraite d'au moins une enceinte et déversée sur la pâte obtenue.

L'emballage pour la mise en oeuvre du procédé mentionné ci-dessus se caractérise essentiellement en ce qu'il comprend au moins une enceinte hermétique et étanche, divisée en au moins deux compartiments hermetiques et étanches dont un contient les produits secs et pulvérulents tels que de la farine et dont l'autre contient du liquide, que la division de l'enceinte est réversible par un moyen amovible permettant la séparation hermétique et étanche ou la mise en communication des deux parties pour le mélange et le pétrissage ou brassage des ingrédients en vue d'obtenir une pâte qui sera étalée par ouverture de l'enceinte sur un moyen de cuisson.

Suivant une autre caractéristique de l'invention, l'emballage utilisé comprend une platine rigide ou semi-rigide sur une face de laquelle sont réalisées les enceintes séparées au moyen d'une paroi souple, ladite platine est dotée de perforation en regard des dites enceintes respectivement et sous la platine une paroi souple pelable est disposée, l'enlèvement de cette dernière ouvrant les perforations pour permettre la distribution.

D'autres avantages et caractéristiques de l'invention apparaîtront à la lecture de la description ci-après d'une forme de réalisation de l'invention donnée à titre d'exemple non limitatif et illustrée par les dessins joints dans lesquels :
- la figure 1 schématise le procédé selon l'invention,
- la figure 2 représente une vue en plan d'une dosette mise en oeuvre par le procédé objet de l'invention,
- la figure 3 et la figure 4 représentent une vue en plan et en coupe d'une dosette,
- la figure 5 est une vue partielle d'une dosette selon figure 3/3,
- la figure 6 est une vue en coupe selon la figure 5,
- les figures 7 et 8 sont des vues de pince de dosette selon les figures précédentes,
- la figure 9 est une vue en plan d'une forme de réalisation de dosette,
- la figure 10 est une vue en plan d'un autre type de dosette pour la mise en oeuvre du procédé objet de l'invention,
- la figure 11 est une vue de la dosette selon la figure 10,
- la figure 12 est une vue en coupe de la dosette selon les figures 10 et 11,
- la figure 13 est une vue représentant plusieurs étapes d'utilisation de la dosette selon les figures 10, 11 et 12,
- les figures 14 et 15 représentent une vue en plan de dessus et une vue en coupe d'un autre type de dosette.

Le procédé selon l'invention vise à la fabrication de mets salés ou sucrés tels que des pizza ou des tartes. Ces mets sont fabriqués à base de pâte cuite et de sauce et/ou garnitures tels qu'anchois, jambons ou autres et dont les ingrédients secs et/ou pulvérulents et/ou humides ne doivent être en contact les uns avec les autres qu'au moment de la préparation.
Les ingrédients secs et/ou pulvérulents sont constitués par un mélange de farine prête à l'emploi et ayant préalablement reçu tous les adjuvants secs utiles à la constitution de la pâte.

Les ingrédients humides sont, d'une part l'eau destinée à être mélangée aux ingrédients secs (farine) et d'autre part, des sauces telles que dans le cas de fabrication de pizza, de la sauce tomate par exemple.

Selon le procédé objet de l'invention, il est fait usage d'un emballage unitaire pour la confection d'un met ; ou de plusieurs emballages dont un contenant les ingrédients pour réaliser la pâte et un contenant la ou les sauces et garnitures.
Cet emballage comprend les dits ingrédients mentionnés plus haut en différentes enceintes de stockage qui sont séparées hermétiquement et qui peuvent être communiquantes entre elles pour permettre le mélange des ingrédients et leur pétrissage en vue de réaliser la pâte et qui peuvent être ensuite ouvertes pour permettre la répartition successive des produits.

Suivant le procédé objet de l'invention, après mélange, brassage et pétrissage des ingrédients secs et humides, la pâte obtenue est déversée sur un organe de cuisson et au moins une garniture est extraite d'au moins une enceinte pour être déversée sur la pâte obtenue, ladite enceinte étant partie de l'emballage.

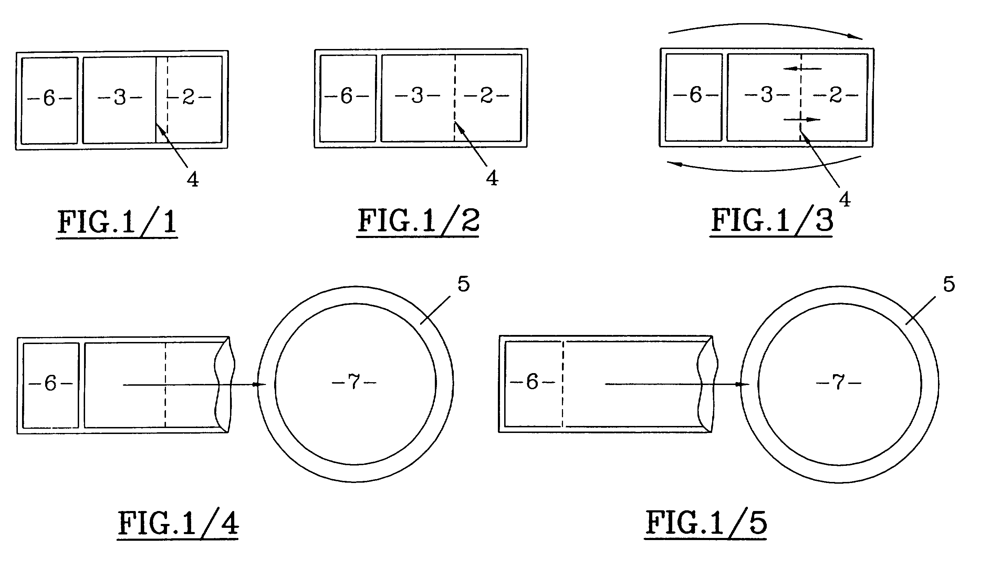

La figure 1 schématise le procédé objet de l'invention.

Selon l'invention, il est fait usage d'un emballage ou d'une dosette 1 constituée par une poche en matière synthétique souple qui sera décrite en détail plus loin. La dosette 1 comprend au moins deux enceintes 2, 3. Les enceintes 2, 3 comme illustré en 1/1 sont séparées en 4 par une séparation hermétique mais réversible qui permet de mettre les enceintes 2, 3 en relation.

Avantageusement, une des enceintes par exemple celle référée par 2 contient les produits secs et pulvérulents, c'est à dire le mélange de farine et l'enceinte 3 contient les produits humides, c'est à dire l'eau à mélanger à la farine pour réaliser la pâte.

En 1/2, la séparation 4 est ouverte, ce qui met en communication les enceintes 3 et 2.

En 1/3 est effectué un mélange et un brassage schématisé par les flèches qui permet la formation de la pâte et son pétrissage par tout moyen, l'agitation de la dosette 1 étant un de ces moyens potentiellement utilisable.

En 1/4 est schématisée l'ouverture de la dosette par une de ses extrémités et le déversement de la pâte obtenue sur une sole chauffante 5 pour la cuisson.

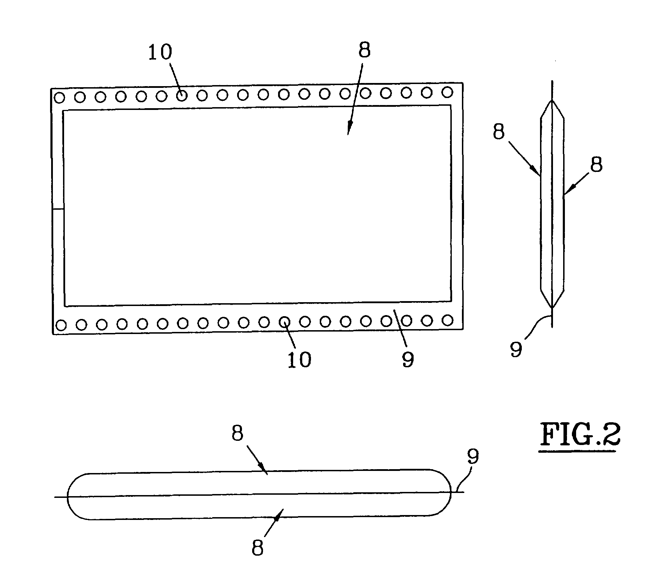

En 1/5 est schématisée l'ouverture d'une enceinte 6 supplémentaire de la dosette renfermant par exemple une sauce à étaler sur la pâte cuite ou au cours de la cuisson. La dosette est représentée à la figure 2 et aux figures suivantes ; telle que représentée, la dosette est constituée par un sachet en deux épaisseurs ou feuilles 8 de forme rectangle soudées sur leurs rives à un cadre 9 plus rigide. Les feuilles 8 sont en toute matière synthétique de qualité alimentaire.

Le cadre 9 est en un matériau plus rigide.

Les bords longitudinaux du cadre sont dotés de moyens permettant une manipulation et une manipulation mécanisée de la dosette.

Dans l'exemple de réalisation représenté, ces moyens sont constitués par des perforations 10 en ligne sur chaque côté longitudinal du cadre pouvant s'engréner avec une roue dentée d'un dispositif de manipulation correspondant.

Le volume interne de la dosette est conçu pour loger le volume d'ingrédients nécessaires à la fabrication d'un met unitaire par exemple une pizza.

Avantageusement, il est fait usage dans le procédé selon l'invention de deux emballages 1 dont un pour le mélange pulvérulent et liquide permettant d'obtenir la pâte, l'autre contenant la ou les sauces et garnitures.

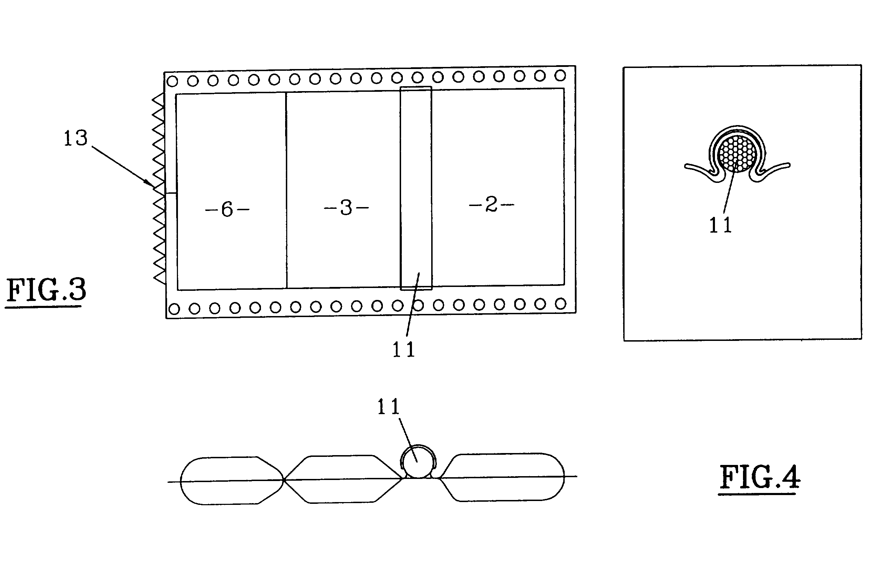

En figures 3 et 4 est représentée une vue en plan et en coupe la dosette selon l'invention avec vue en détail et à part de la pince 11.
Dans cet exemple de réalisation, la dosette comprend au moins deux enceintes 2 et 3 contenant les produits secs et/ou pulvérulents tels la farine et les produits humides et une enceinte 6 contenant un autre ingrédient qui peut par exemple être une sauce.

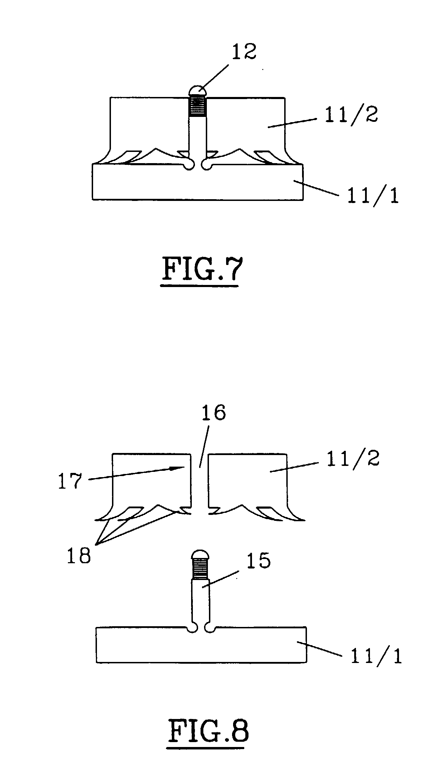

Les enceintes 2 et 3 sont séparées en 4 par un moyen de séparation hermétique qui est constitué par une pince 11 articulée ou encliquetée dont chacune des branches recouvre une face de la dosette.
La pince est représentée plus en détail à la figure 7 et à la figure 8.
Comme on peut le voir et comme il sera exposé plus loin, une des branches de la pince présente des pions 12 avec moyens de blocage qui pénètrent dans des perçages correspondants de la branche complémentaire de la pince.
Sur le côté arrière de la dosette, qui borde l'enceinte 6, le cadre 9 présente une succession de dents 13 en peigne qui peut servir à étaler la sauce de l'enceinte 6.

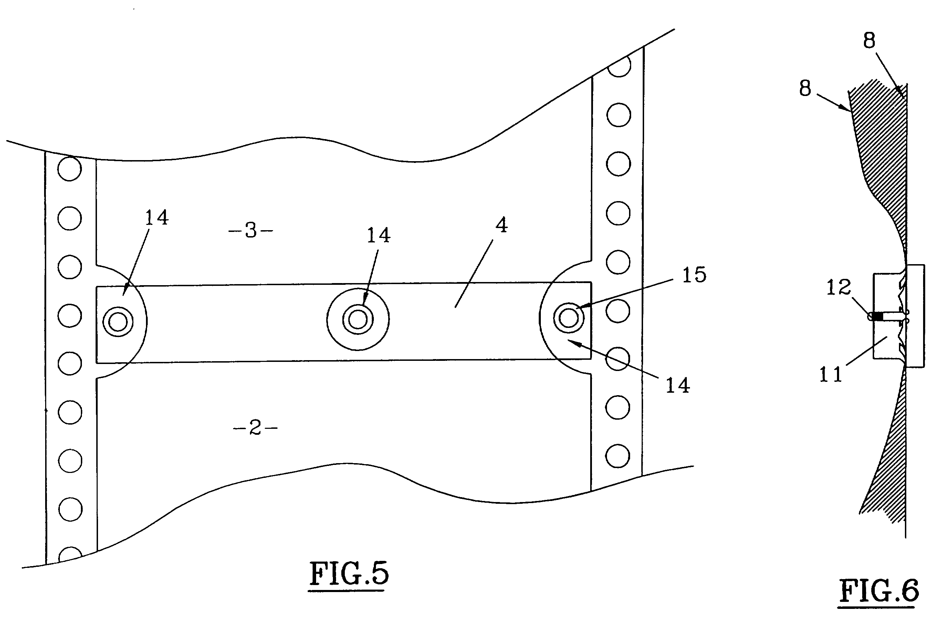

En figures 5 et 6 est représentée une vue partielle en plan (figure 5) et en coupe de la dosette au niveau de la séparation en 4 des enceintes 2 et 3.
Les feuilles 8 constituant la dosette présentent à ce niveau des zones 14 de soudage de forme cylindrique ou elliptique et dans ces zones 14 sont ménagés des perçages 15 de passage des pions 12 de la pince 11.
Ces zones de soudage présentent en outre l'avantage de diminuer la dimension de la zone de communication entre les enceintes 2/3 lorsque la pince 4 est enlevée, ce qui, lors du passage des produits de l'une dans l'autre enceinte et visse versa, réalise un laminage qui contribue au brassage de ces produits entre eux.

Aux figures 7 et 8 est représentée la pince 11 vue en coupe.
Une de ses branches 11/1 présente des pions 12 verticaux tournés vers l'intérieur ou l'autre branche (dont un seul est représenté).
Les pions sont dotés de cannelures annulaires 15.
L'autre branche 11/2 présente des perçages 16 (dont un seul est représenté).

La lèvre supérieure de chaque perçage présente au moins une nervure annulaire 17 de bridage qui, lors du blocage des branches l'une sur l'autre et des pions 12 dans les perçages 16, se bloquent dans une cannelure 15 correspondante.

Avantageusement, la face interne de la branche 11/2 de la pince qui vient au contact de la feuille 8 de la dosette est dotée de lèvres longitudinales 18 qui s'écrasent entre les branches de la pince.
La pince 11 peut être, à la fabrication de la dosette et avant remplissage des enceintes 2, 3, mise en place par tous moyens adaptés assurant une force de serrage suffisante pour garantir l'étancheité et l'herméticité de la séparation entre les deux enceintes.

L'enlèvement de la pince lorsqu'il faut mélanger les ingrédients, peut se faire par tous moyens mécaniques automatisés ou non.

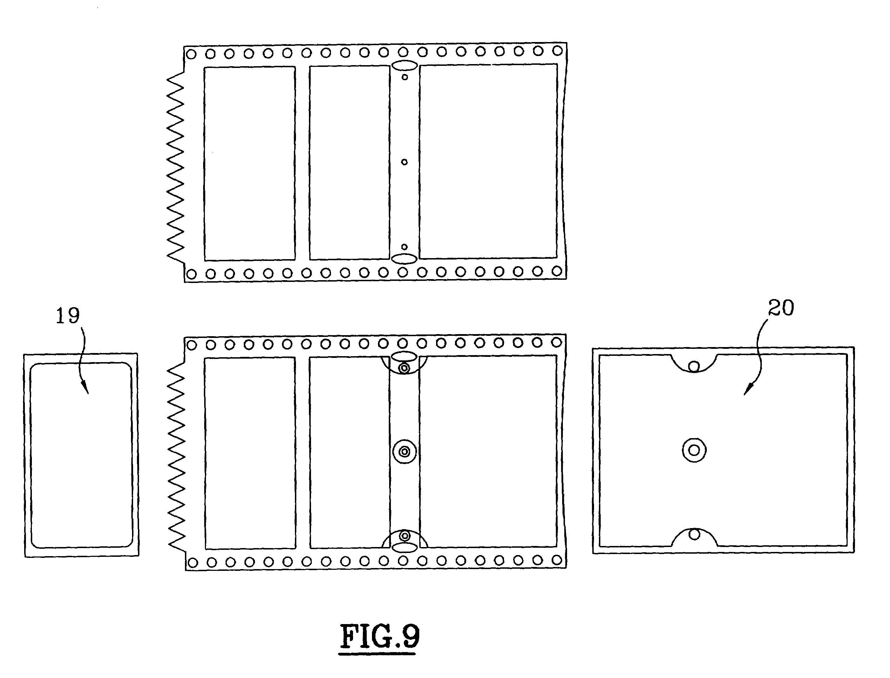

En figure 9 est représentée une autre forme de réalisation de la dosette selon l'invention suivant laquelle un sachet sauce 19 et un sachet pâte 20 sont disposés dans les enceintes correspondantes de la dosette.
La mise en oeuvre s'effectue après mélange, brassage et pétrissage de la pâte par ouverture par tous moyens connus des enceintes 3/2 réunies puis déversement de la pâte liquide sur la sole de cuisson et ensuite ouverture de l'enceinte 6 et déversement de la sauce.

L'ouverture de l'enceinte 6 peut se faire par tous moyens connus, comme pour l'enceinte 3/2 par exemple par tranchage au moyen d'un couteau ou par enlèvement d'un opercule collé ou soudé sur un perçage de vidange pour les produits liquides ou semi-liquides.
L'ouverture peut également s'effectuer par séparation des feuilles 8 superposées constituant la dosette dont une au moins peut être entrainée en enroulement sur un arbre creux rotatif transversal à son axe longitudinal.

Le mélange et le brassage et pétrissage des produits contenus dans les enceintes 2/3 de la dosette peuvent être effectués par pressage ou par mouvement de va et vient alternatifs d'un rouleau presseur.

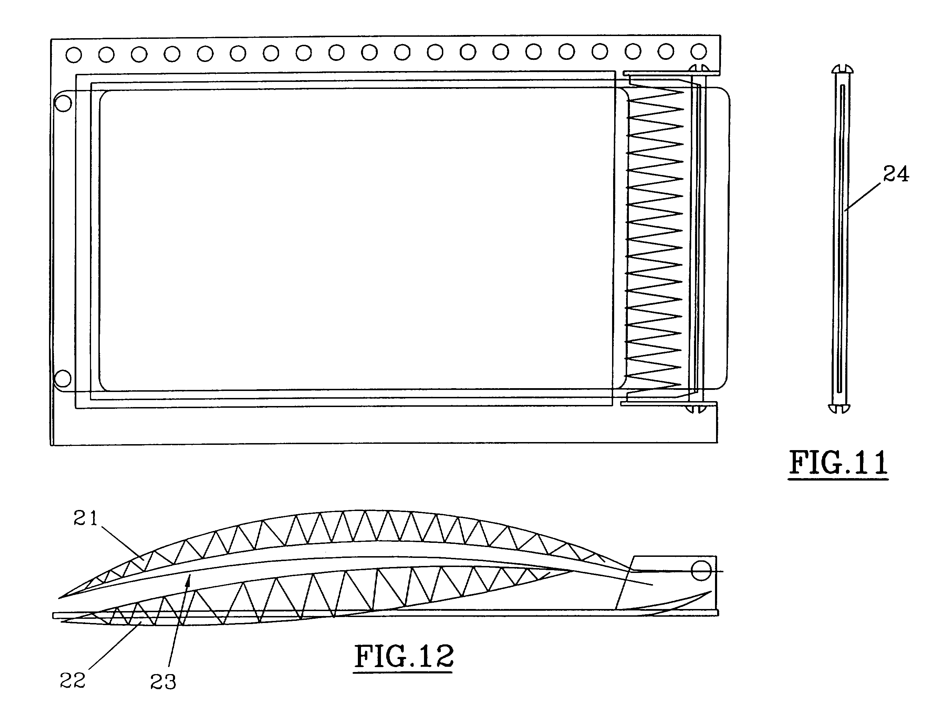

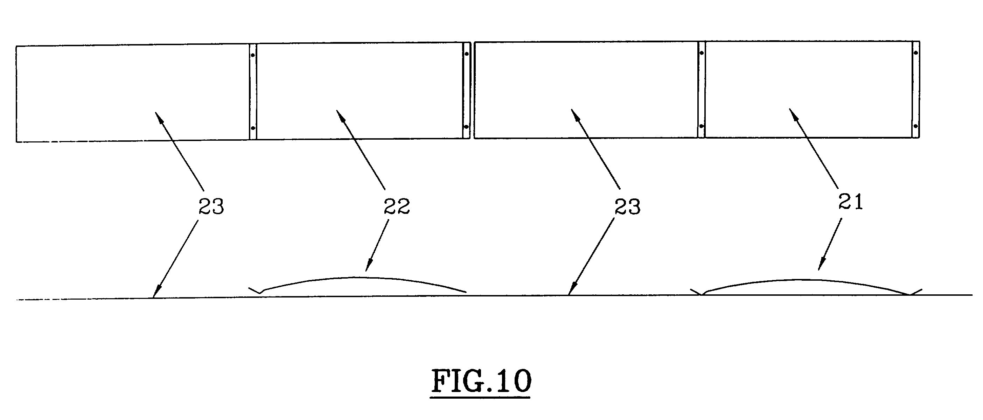

En figures 10, 11 et 12 est représentée une autre forme de réalisation de la dosette.
Suivant cette forme de réalisation, la dosette est constituée de deux enceintes souples de forme rectangle référencées par 21 et 22.
Les deux enceintes 21 et 22 sont reliées par une bande 23 dont la longueur est égale à celle de chacune des enceintes et dont la largeur est égale à chacune des enceintes (fig. 10).
Comme représenté en figure 12, les enceintes et la bande intercalaire sont repliées l'une sur l'autre.
Ce type de dosette collabore avec un arbre rotatif 24 à fente ou tout système analogue qui comme représenté aux figures 13/1 et 13/3, enroule d'abord la couche inférieure de la première enceinte en la séparant de la couche supérieure, ce qui ouvre l'enceinte et déverse les produits qu'elle contient.

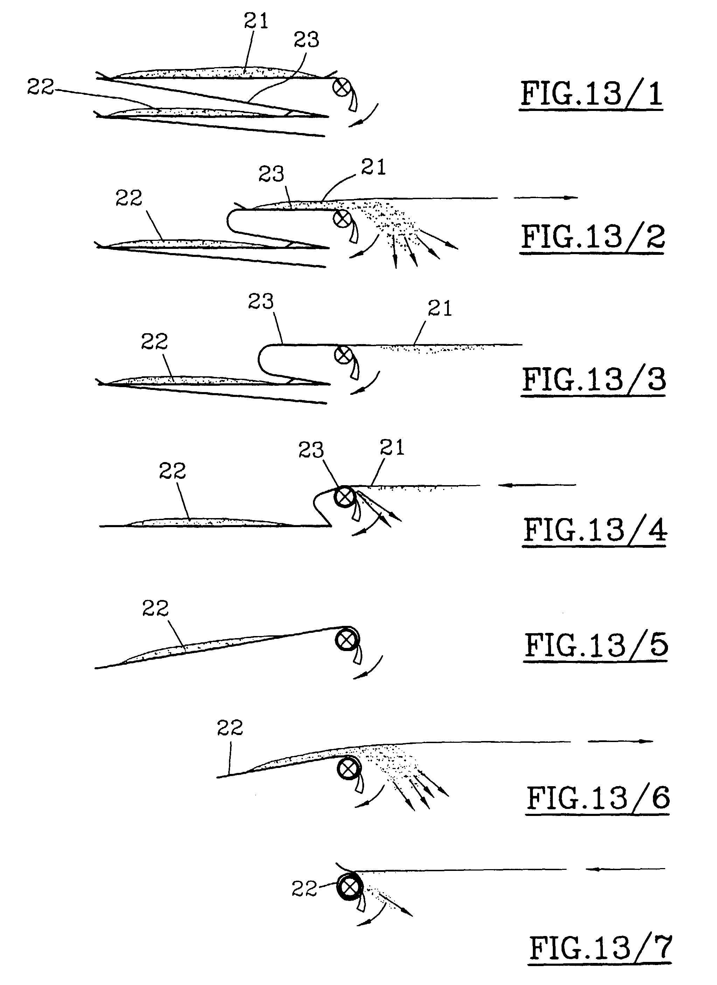

Ensuite, selon la figure 13/3, l'axe va enrouler la feuille intercalaire 23 et va tirer l'enceinte 22 qui va alors s'enrouler en s'ouvrant comme la précédente par séparation de ses deux feuilles.

Avantageusement, la dosette au niveau de la première enceinte 21, est dotée de moyens telles que languettes permettant d'une part, d'enrouler une de ses faces sur l'axe et d'autre part, de séparer les faces l'une de l'autre.
Avantageusement, l'axe fendu ou clef tourne dans le sens trigonométrique.

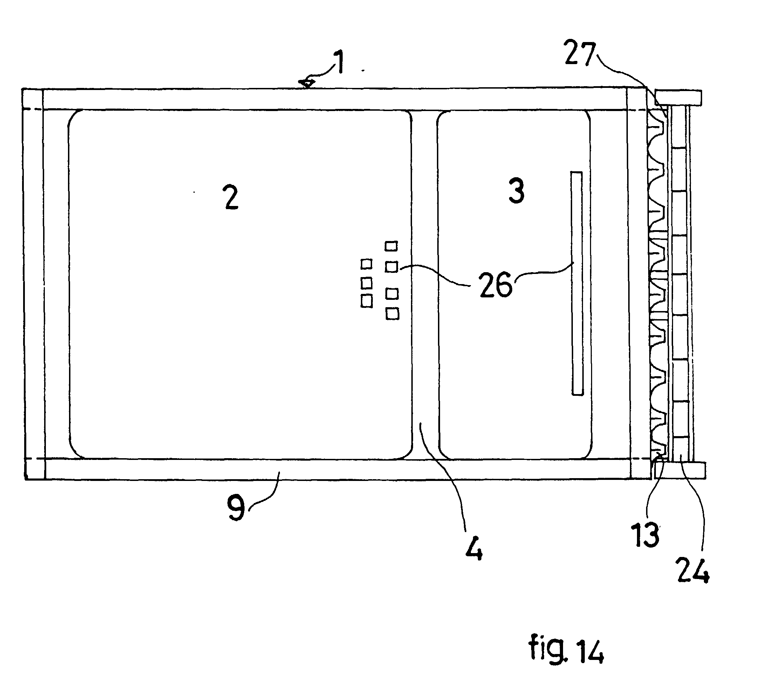

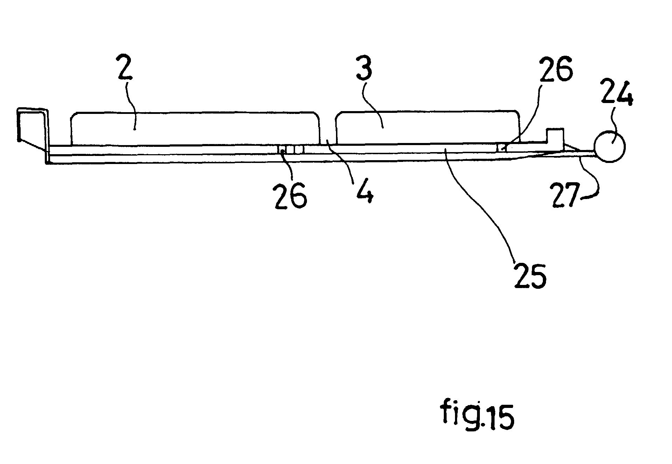

Suivant la forme de réalisation de l'invention représentée aux figures 14 et 15, chaque dosette est constituée d'une platine 25 rigide ou semi-rigide de forme rectangle de préférence.
La platine est dotée de perforations et/ou fentes 26 réalisées aux emplacements des différentes enceintes.
Sur une des faces de la platine, une feuille soudée de préférence thermoformée réalise les enceintes séparées.
La soudure 4 entre les enceintes 2-3 est pelable pour permettre leur mise en communication.

Sur l'autre face de la platine, inférieure est fixée par exemple par soudage sur ses rives et en face des fentes ou perçages une feuille pelable 27 qui obture les ouvertures ou fentes 26.
Cette feuille est rattachée à l'arbre rotatif 24 constituant clef transversale à la platine.

Par rotation de la clef 24 se réalise l'arrachement de la feuille 26 qui ouvre les enceintes et permet le déversement des produits.

## Revendications

1. Procédé de fabrication de mets salés ou sucrés à base de pâte cuite réalisée par mélange de produits secs et pulvérulents, tels de la farine, et de liquide, tel de l'eau et à base de sauce, et/ou de garniture, pâteuse ou liquide et/ou de condiments et ingrédients à répandre sur la pâte tels que des pizzas, tartes ou autres mets à base de pâte et dont les ingrédients de base secs et/ou pulvérulents et/ou liquides ou humides, tels les sauces, ne doivent être mis en contact qu'à un moment déterminé pendant le déroulement de la préparation, ledit procédé faisant appel à un emballage ou dosette (1) comprenant des enceintes (2, 3, 6) séparées pour les dits ingrédients pulvérulents, pour le liquide, pour la sauce et/ou pour la garniture et/ou pour les condiments, caractérisé en ce que :
- les enceintes (2, 3) de l'emballage (1) contenant les produits pulvérulents et le liquide sont mises en communication pour réaliser leur mélange donnant la pâte, que celle-ci est déversée sur des moyens de cuisson (7) puis que la ou les enceintes (6) contenant la sauce et/ou garniture et/ou les autres ingrédients est ou sont ouvertes et que le ou les dits produits sont déversés sur la pâte.

2. Procédé selon la revendication 1 caractérisé en ce qu'il est fait usage de deux emballages (1) de même conception dont un pour les produits pulvérulents et l'eau et un pour la sauce et la garniture.

3. Emballage mis en oeuvre dans le procédé selon la revendication 1 caractérisé en ce qu'il est constitué par un sachet en deux épaisseurs ou feuilles (8) soudées sur leurs rives à un cadre (9) plus rigide.

4. Emballage selon la revendication 3 caractérisé en ce que la séparation des enceintes est obtenue par soudure des feuilles (8), les soudures étant réversibles lorsque les produits sont à mélanger avant ouverture de l'emballage et étant irréversible lorsque les produits sont à déverser sur la pâte réalisée.

5. Emballage selon la revendication 3 caractérisé en ce que le cadre (9) est doté de moyens permettant sa manipulation mécanisée.

6. Emballage selon la revendication 3 caractérisé en ce que l'ouverture de ses enceintes se fait par enroulement d'une de ses feuilles (8) sur un arbre rotatif (24).

7. Emballage selon la revendication 3 caractérisé en ce que l'ouverture de ses enceintes peut se faire par enlèvement d'un opercule collé ou soudé sur un perçage de vidange.

8. Emballage selon les revendications 3, 4 et 5 caractérisé en ce qu'une pince (11) transversale sépare les enceintes.

9. Emballage selon la revendication 8 caractérisé en ce que les branches 11/1 et 11/2 de la pince se bloquent l'une à l'autre par pénétration de pions 12 de l'une dans des orifices de l'autre, les dits pions (12) passant par des orifices, perçages de la poche.

10. Emballage selon la revendication 8 caractérisé en ce que les perçages sont ménagés dans des zones de soudage (14) des feuilles entre elles constituant la poche.

11. Emballage selon la revendication 3 caractérisé en ce qu'il est doté de moyens de répartition des produits qu'il contient.

12. Emballage pour la mise en oeuvre du procédé selon la revendication 1 caractérisé en ce qu'il comprend deux enceintes (21) et (22) comportant chacune un produit différent, les dites enceintes étant réunies par une feuille (23) intermédiaire de même longueur que l'une quelconque des enceintes.

13. Emballage selon la revendication 12 caractérisé en ce que les enceintes (21) et (22) et la feuille (23) sont repliées l'une sur l'autre ; que l'ouverture de l'une entraîne ensuite l'ouverture de l'autre par enroulement d'une feuille de la première puis de la feuille intermédiaire (23) puis d'une feuille de la deuxième sur un axe à fente rotatif.

14. Emballage mis en oeuvre dans la procédure selon les revendications 1 et 2 caractérisé en ce qu'il est constitué d'une platine (25) rigide ou semi-rigide dotée de perforations (26) et/ou fentes réalisées aux emplacements des différentes enceintes, une des faces de la platine reçoit les enceintes (2, 3) réalisées par une feuille soudée, sur l'autre face de la platine est fixée une feuille pelable (27) qui obture les ouvertures.

15. Emballage selon la revendication 14 caractérisé en ce que la feuille pelable est rattachée à l'arbre rotatif (24) constituant la clef.

## Patentansprüche

1. Verfahren zum Herstellen von salzigen oder süßen Speisen auf der Grundlage eines gebackenen Teiges, der hergestellt ist durch Mischen von trockenen und pulverförmigen Produkten, wie Mehl, und Flüssigkeit, wie Wasser, und auf der Grundlage von Sauce und/oder Garnitur in pastenförmiger oder flüssiger Form und/oder Gewürzen und Zutaten, die auf dem Teig zu verteilen sind, wie Pizzen, Torten oder anderen Speisen auf Teigbasis, und deren trockene und/oder pulverförmige und/oder flüssige oder feuchte Grundzutaten, wie die Saucen, erst zu einem bestimmten Zeitpunkt während des Ablaufs der Zubereitung in Berührung gebracht werden dürfen, wobei das Verfahren eine Packung oder Dosette (1) mit getrennten Kammern (2, 3, 6) für die pulverförmigen Zutaten, die Flüssigkeit, die Sauce und/oder die Garnitur und/oder die Gewürze benutzt, **dadurch gekennzeichnet, daß**
- die Kammern (2,3) der Packung (1), welche die pulverförmigen Produkte und die Flüssigkeit enthalten, in Verbindung gebracht werden, um sie zu mischen und den Teig zu liefern, daß dieser auf die Backvorrichtung (7) aufgebracht wird und dann die Kammer oder Kammern (6), welche die Sauce und/oder Garnitur und/oder die anderen Zutaten enthält oder enthalten, geöffnet wird oder geöffnet werden und daß das Produkt oder die Produkte auf den Teig abgegeben werden.

2. Verfahren nach Anspruch 1, **dadurch gekennzeichnet, daß** zwei Packungen (1) von gleichem Aufbau verwendet werden und zwar eine für die pulverförmigen Produkte und das Wasser und eine für die Sauce und die Garnitur.

3. Packung, die im Verfahren nach Anspruch 1 benutzt wird, **dadurch gekennzeichnet, daß** sie aus einem Kissen aus zwei Dicken oder Folien (9) besteht, die an ihren Kanten an einem steiferen Rahmen (9) angeschweißt sind.

4. Packung nach Anspruch 3, **dadurch gekennzeichnet, daß** die Trennung der Kammern durch Schweißen der Folien (8) erhalten wird, wobei die Schweißnähte lösbar (reversibel) sind, wenn die Produkte vor dem Öffnen der Packung gemischt werden sollen, und unlösbar (irreversibel) sind, wenn die Produkte auf den hergestellten Teig abgegeben werden sollen.

5. Packung nach Anspruch 3, **dadurch gekennzeichnet, daß** der Rahmen (9) mit Vorrichtungen versehen ist, die seine automatisierte (mechanisierte) Handhabung ermöglichen.

6. Packung nach Anspruch 3, **dadurch gekennzeichnet, daß** das Öffnen ihrer Kammern erfolgt, indem eine ihrer Folien (8) auf einer drehbaren Welle (24) aufgewickelt wird.

7. Packung nach Anspruch 3, **dadurch gekennzeichnet, daß** das Öffnen ihrer Kammern erfolgen kann, indem eine auf eine Entleerungsöffnung aufgeklebte oder geschweißte Abdeckung abgehoben wird.

8. Packung nach den Ansprüchen 3, 4 und 5, **dadurch gekennzeichnet, daß** eine quer verlaufende Klemme (11) die Kammern trennt.

9. Packung nach Anspruch 8, **dadurch gekennzeichnet, daß** die Arme (11/1 und 11/2) der Klemme durch Eindringen von Zapfen (12) der einen in Öffnungen der anderen aneinander blockiert sind, wobei die Zapfen (12) Öffnungen durchsetzen, welche als Durchbohrungen der Tasche ausgebildet sind.

10. Packung nach Anspruch 8, **dadurch gekennzeichnet, daß** die Durchbohrungen in Schweißzonen (14) der Folien ausgebildet sind, die zwischen sich die Tasche bilden.

11. Packung nach Anspruch 3, **dadurch gekennzeichnet, daß** sie mit Einrichtungen zur Verteilung der in ihr enthaltenen Produkte versehen ist.

12. Packung zur Durchführung des Verfahrens nach Anspruch 1, **dadurch gekennzeichnet, daß** sie zwei Kammern (21 und 22) aufweist, die jede ein anderes Produkt enthalten, wobei die Kammern durch eine Zwischenfolie (23) von gleicher Länge wie eine beliebige der Kammern vereint sind.

13. Packung nach Anspruch 12, **dadurch gekennzeichnet, daß** die Kammern (21 und 22) und die Folie (23) aufeinander umgelegt sind, daß das Öffnen der einen anschließend das Öffnen der anderen zur Folge hat, indem eine Folie der ersten und dann die Zwischenfolie (23) und anschließend eine Folie der zweiten auf einer drehbaren geschlitzten Welle aufgewickelt werden.

14. Packung zur Durchführung des Verfahrens nach Anspruch 1 und 2, **dadurch gekennzeichnet, daß** sie aus einer steifen oder halbsteifen Platine (25) besteht, die mit Löchern (26) und/oder Schlitzen versehen ist, die an den Positionen der verschiedenen Kammern hergestellt sind, wobei eine der Seiten der Platine die aus einer geschweißten Folie hergestellten Kammern (2, 3) aufnimmt, während auf der anderen Seite der Platine eine abziehbare Folie (27) befestigt ist, welche die Öffnungen verschließt.

15. Packung nach Anspruch 14, **dadurch gekennzeichnet, daß** die abziehbare Folie an der den Schlüssel bildenden drehbaren Welle (24) angebracht ist.

## Claims

1. Method for making savoury or sweet food on the basis of baked dough by mixing dry and powder-form products, such as flour, and liquid, such as water and based on sauce, and/or garnish, paste-like or liquid and/or condiments and ingredients to be spread over the dough such as pizzas, tarts or other dough-based food, for which the dry and/or powder-form and/or liquid or moist basic ingredients, such as sauces, must be put into contact only at a specific moment during the progress of preparation, said method calling for a pack or dose dispenser (1) comprising separate enclosures (2, 3, 6) for said powder-form ingredients, for the liquid, for the sauce and/or for the garnish and/or for the condiments, characterised in that:
- the enclosures (2, 3) of the pack (1) containing the powder-form products and the liquid are put into communication in order to mix them, giving the dough, in that the latter is poured over baking means (7) then in that the enclosure(s) (6) containing the sauce and/or garnish and/or the other ingredients is or are opened and in that said product(s) are poured over the dough.

2. Method according to Claim 1 characterised in that use is made of two packs (1) of the same design, one of which is for the powder-form products and water and one of which is for the sauce and the garnish.

3. Pack used in the method according to Claim 1 characterised in that it is constituted by a bag made of two thicknesses or sheets (8) welded at their edges to a more rigid frame (9).

4. Pack according to Claim 3 characterised in that the separation of the enclosures is obtained by welding sheets (8), the welds being reversible when the products are to be mixed before the pack is opened and being irreversible when the products are to be poured over the dough when made.

5. Pack according to Claim 3 characterised in that the frame (9) is provided with means allowing it to be handled mechanically.

6. Pack according to Claim 3 characterised in that the opening of its enclosures takes place by rolling up one of its sheets (8) over a rotary shaft (24).

7. Pack according to Claim 3 characterised in that the opening of its enclosures can take place by removing a lid stuck or welded to an emptying hole.

8. Pack according to Claims 3, 4 and 5 characterised in that a transverse clamp (11) separates the enclosures.

9. Pack according to Claim 8 characterised in that the branches 11/1 and 11/2 of the clamp are locked to one another by the penetration of pins 12 of one into orifices of the other, said pins (12) passing through orifices, holes in the pocket.

10. Pack according to Claim 8 characterised in that the holes are made in welding zones (14) of the sheets constituting the pocket between them.

11. Pack according to Claim 3 characterised in that it is provided with means for distributing the products it contains.

12. Pack for implementing the method according to Claim 1 characterised in that it comprises two enclosures (21) and (22) each having a different product, said enclosures being connected by an intermediate sheet (23) of the same length as any one of the enclosures.

13. Pack according to Claim 12 characterised in that the enclosures (21) and (22) and the sheet (23) are folded over one another; in that the opening of one then leads to the opening of the other by the rolling of a sheet of the first, then the intermediate sheet (23), then a sheet of the second over a rotary slotted pin.

14. Pack used in the procedure according to Claims 1 and 2 characterised in that it is constituted by a rigid or semi-rigid plate (25) provided with perforations (26) and/or slots made at the locations of the different enclosures, one of the faces of the plate receives the enclosures (2, 3) made by a welded sheet, to the other face of the plate is fixed a peelable sheet (27) that blocks off the openings.

15. Pack according to Claim 14 characterised in that the peelable sheet is attached to the rotary shaft (24) constituting the key.
